# EUROPEAN PATENT APPLICATION

(11) **EP 3 348 693 A1**
(43) Date of publication of application: **18.07.2018**
(21) Application number: 16843651.7
(22) Date of filing: 07.09.2016
(51) Int. Cl.: D06F 25/00, D06F 23/04, D06F 23/06

(54) **WASHING MACHINE**

(30) Priority: 07.09.2015 JP 2015175841
(71) Applicant: Qingdao Haier Washing Machine Co., Ltd., Shandong 266101 (CN); Aqua Co., Ltd, Chiyoda-ku Tokyo 100-0005 (JP)
(72) Inventor: MAMIYA, Haruo, Tokyo 100-0005 (JP); KAWAMURA, Tamotsu, Tokyo 100-0005 (JP); NAKANISHI, Takashi, Tokyo 100-0005 (JP); SATO, Hiroki, Tokyo 100-0005 (JP); YOSHIDA, Kenji, Tokyo 100-0005 (JP)
(74) Representative: HGF Limited
(86) International application number: PCT/CN2016/098311
(87) International publication number: WO 2017/041713

(57) **Abstract**

The present invention provides a washing machine which can improve washing performance in a structure which includes a washing drum capable of rotating in a manner of crossing with a vertical direction. The washing machine (1) includes: a washing drum (3) having an inner drum (11) capable of rotating around an axis (J); a agitator (45) capable of rotating in order to agitate the washings (Q) in the inner drum (11); a motor (46) for rotating the inner drum (11) and the agitator (45); a rotating mechanism; and a microcomputer (48). The rotating mechanism can rotate the washing drum (3) about the axis (J) in a manner of crossing with an up-down direction (Z), so as to change a rotating angle (θ) of the washing drum 3. The microcomputer (48) controls the motor (46) and the rotating mechanism so as to execute washing operation for rotating the agitator (45) in reverse or rotating the inner drum (11) at multiple rotating angles (θ).

## Description

### TECHNICAL FIELD

The present invention relates to a washing machine.

### BACKGROUND

In a washing machine described in the following patent literature 1, hoisting rods are arranged on four corners of a housing for accommodating a bucket, and a horizontal platform is arranged on lower end parts of the hoisting rods. The bucket is fixed to a inclined platform supported by a inclined fulcrum which is arranged in a manner of inclining to a front surface of the horizontal platform in a mode of free rotation. A washing drum is arranged in the bucket in a mode of free rotation; and a pulsator for agitating washings and water in the washing drum is arranged on an inner side of a bottom surface of the washing drum in a mode of free rotation. The pulsator rotates at low speed in a state that the washing drum is inclined in the washing process of the washing machine.

In a structure of the washing machine in the patent literature 1 that the washing drum is inclined in the washing process and the pulsator is rotated, when the washing drum is inclined to a certain degree or above, mechanical force produced by the rotation of the pulsator can hardly be transmitted to the washings in the washing drum. In this way, since the movement of the washings in the washing drum becomes harder and then dirt can hardly be removed from the washings, improvement of washing performance is limited.

### Related Technical Literature

### Patent Literature

Patent Literature 1: Japanese Laid-open patent publication No. 4647561

### SUMMARY

### Problems to be solved by the invention

The present invention is based on the background, and aims to provide a washing machine which has a structure including a washing drum capable of rotating in a manner of crossing with a vertical direction, so as to improve the washing performance.

### Solution for solving the problems

The embodiments of the present invention provides a washing machine, including: a washing drum having an inner drum and an outer drum, where the inner drum is a cylindrical inner drum for accommodating washings and can rotate around an axis of the inner drum, the outer drum accommodates the inner drum, the washing drum can rotate in a manner where the axis crosses with a vertical direction; an agitator capable of rotating to agitate the washings in the inner drum; a motor for rotating the inner drum and the agitator; a rotating mechanism for rotating the washing drum so as to change a crossing angle between the vertical direction and the axis; and a controller for controlling the motor and the rotating mechanism so as to execute a washing operation where the agitator rotates in reverse or the inner drum rotates at multiple crossing angles.

In addition, in some embodiments of the present invention, under a state that the washing drum rotates in the washing operation, the controller rotates the agitator in reverse or rotates the inner drum.

### Effects of the invention

According to the embodiments of the present invention, in the washing machine including the washing drum which can rotate in a manner of crossing with the vertical direction, the inner drum of the washing drum can rotate around the axis of the inner drum, and the agitator can rotate in order to agitate the washings in the inner drum. In the washing machine, the motor rotates the inner drum and the agitator; and the rotating mechanism rotates the washing drum so as to change the crossing angle between the vertical direction and the axis.

In the washing operation of the washing machine, the controller controls the motor and the rotating mechanism so as to rotate the agitator in reverse or rotate the inner drum at multiple crossing angles. In this way, the combination of the reverse rotation of the agitator and the rotation of the inner drum enables the mechanical force produced by the agitator and the inner drum to be efficiently transmitted to the washings, regardless of the crossing angle (in other words, even if the washing drum is inclined to a certain degree relative to the vertical direction). In addition, position alternation of the washings in the inner drum can be promoted to reduce uneven washing of the washings. Further, the combination of the reverse rotation of the agitator and the rotation of the inner drum at multiple crossing angles enables the mechanical force to be further efficiently transmitted to the washings, to further reduce uneven washing.

As a result, washing performance of the washing machine can be improved.

In addition, according to the embodiments of the present invention, under a state that the washing drum rotates in the washing operation, the agitator rotates in reverse or the inner drum rotates. Thus, a detergent can be efficiently dissolved in the water to generate washing water of high concentration, or the washing water is efficiently infused into the washings. Therefore, the washing performance can be further improved. In addition, the washing water is produced or the washing water is infused into the washings during the rotation of the washing drum, so as to shorten the time of the washing operation.

### BRIEF DESCRIPTION OF DRAWINGS

FIG. 1 is a schematic three-dimensional diagram illustrating a washing machine in an embodiment of the present invention;
FIG. 2 is a schematic longitudinal-section left view of a washing drum;
FIG. 3 is a block diagram illustrating an electrical structure of a washing machine;
FIG. 4 is a flow chart illustrating control actions in washing operation;
FIG. 5 is a flow chart illustrating control actions in washing operation; and
FIG. 6 is a table illustrating data related to washing operation.

### List of reference signs

1: washing machine; 3: washing drum; 8: rotating mechanism; 10: outer drum; 11: inner drum; 45: agitator; 46: motor; 48: microcomputer; J: axis; Q: washings; Z: up-down direction; θ: rotating angle.

### DETAILED DESCRIPTION

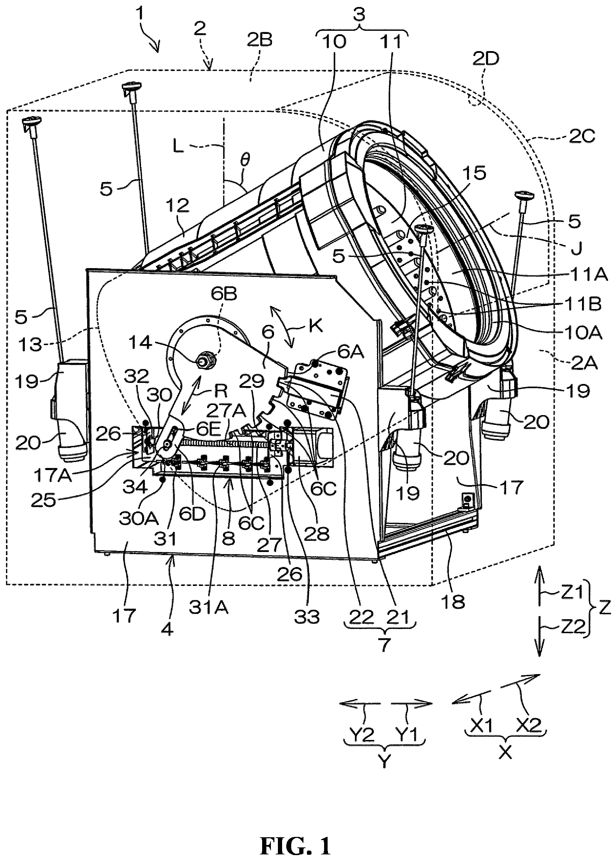

Embodiments of the present invention are described in detail below with reference to drawings. Fig. 1 is a schematic three-dimensional diagram illustrating a washing machine 1 in an embodiment of the present invention. An up-down direction in Fig. 1 is called as an up-down direction Z of the washing machine 1; a left-right direction in Fig. 1 is called as a front-rear direction Y of the washing machine 1; and a transverse direction approximately orthogonal to paper of Fig. 1 is called as a left-right direction X. The up-down direction Z is also a vertical direction. In the up-down direction Z, an upper side is called as an upper side Z1; and a lower side is called as a lower side Z2. In the front-rear direction Y, a right side in Fig. 1 is called as a front side Y1; and a left side in Fig. 1 is called as a rear side Y2. In the left-right direction X, an outer side of the paper of Fig. 1 is called as a left side X1; and an inner side of the paper of Fig. 1 is called as a right side X2.

Although the washing machine 1 also includes a clothes washing and drying machine with a clothes drying function, the washing machine 1 is described by taking a washing machine which only executes washing operation as an example below without explaining the clothes drying function. The washing operation includes a washing process, a rinsing process and a dewatering process. Components, shown in FIG. 1, which form the washing machine 1 include: a housing 2, a washing drum 3 arranged in the housing 2, a supporting frame 4, a hoisting rod 5, a rotating part 6, an unlocking mechanism 7 and a rotating mechanism 8.

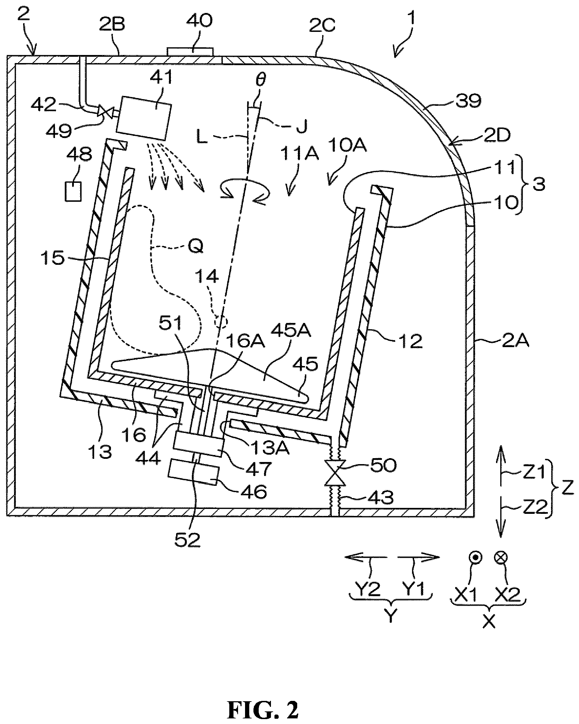

The housing 2 is, for example, made of metal, and is formed in a shape of a box. The housing 2 has a connecting surface 2C for connecting a front surface 2A and an upper surface 2B. The connecting surface 2C is, for example, an inclined surface which drops towards the front side Y1. An outlet-inlet 2D for throwing in and taking out washings Q (see FIG. 2 below) from the washing machine 1 is formed in a manner of bridging the front surface 2A and the connecting surface 2C.

The washing drum 3 includes an outer drum 10 and an inner drum 11. The outer drum 10 is, for example, made of resin, and is formed in a cylindrical shape with a bottom. In the washing process and the rinsing process, water is stored in the outer drum 10. An imaginary straight line passing through a center of a circle of the outer drum 10 is an axis J of the outer drum 10. The cylindrical outer drum 10 with a bottom has a circumferential wall 12 with substantially cylindrical shape around the axis J and a disc-shaped bottom wall 13 which is configured to be orthogonal to the axis J and to block a hollow part of the circumferential wall 12 on the lower side Z2. A circular opening 10A encircled by an upper end edge of the circumferential wall 12 is formed in the upper end part of the washing drum 3 opposed to the bottom wall 13. The opening 10A is used for the washings Q thrown in and taken out from the washing machine 1 to pass. Metal rotating shafts 14 protruding to an outer side along the left-right direction X are arranged on left and right side surfaces of the circumferential wall 12 respectively. Fig. 1 only shows the rotating shaft 14 on the left side X1. The pair of left and right rotating shafts 14 are configured in a same position when observed from the left-right direction X.

The inner drum 11 is, for example, made of metal, and is formed in a cylindrical shape with a bottom smaller than the outer drum 10. The washings Q are accommodated into the inner drum 11. The cylindrical inner drum 11 with a bottom has a circumferential wall 15 with substantially cylindrical shape around the axis J and a disc-shaped bottom wall 16 (see FIG. 2) which is configured to be orthogonal to the axis J and to block a hollow part of the circumferential wall 15 on the lower side Z2. A circular opening 11A through which the washings Q thrown in and taken out from the inner drum 11 pass is formed in an upper end part of the inner drum 11 on an opposed side of the bottom wall 16. The inner drum 11 is coaxially accommodated into the outer drum 10. Therefore, the axis of the inner drum 11 is the above axis J. In a state that the inner drum 11 is accommodated into the outer drum 10, the opening 11A of the inner drum 11 is located at an inner side of an opening 10A of the outer drum 10. The opening 11A faces the outlet-inlet 2D of the housing 2. Thus, the washings Q can be thrown in and taken out of the inner drum 11. A plurality of through holes 11B are formed in a circumferential wall 12 and a bottom wall 13 of the inner drum 11; and water in the outer drum 10 passes between the outer drum 10 and the inner drum 11 via the through holes 11B. Therefore, a water level in the outer drum 10 is consistent with a water level in the inner drum 11.

The supporting frame 4 is made of metal, and includes a pair of left and right side plates 17 and a beam member 18 arranged between lower end parts of the pair of side plates 17. Each side plate 17 is formed in a substantially rectangular shape when observed from the left-right direction X, and is thin in the left-right direction X. A washing drum 3 is arranged between the pair of side plates 17.

For the outer drum 10 of the washing drum 3, the rotating shaft 14 protruding to the left side X1 penetrates through the side plate 17 on the left side X1, and is rotatably supported by the side plate 17 on the left side X1 via a bearing (not shown). For the outer drum 10, the rotating shaft 14 (not shown) protruding to the right side X2 penetrates through the side plate 17 on the right side X2, and is rotatably supported by the side plate 17 on the right side X2 via a bearing (not shown). Thus, the washing drum 3 is supported by the supporting frame 4, and can rotate about the rotating shaft 14 in the manner where the axis J of the outer drum 10 and the inner drum 11 crosses with the up-down direction Z. Specifically, as the washing drum 3 rotates, the axis J is inclined to the front-rear direction Y relative to the up-down direction Z. The direction in which the washing drum 3 rotates is called as a rotating direction K.

A sharp crossing angle between an imaginary reference axis L extending along the up-down direction Z and the axis J is a rotating angle θ of the washing drum 3 relative to the reference axis L. The smaller the rotating angle θ is, the closer to a vertical posture the washing drum 3 is. The larger the rotating angle θ is, the more inclined to the front side Y1 the washing drum 3 is in such a manner that the opening 10A of the outer drum 10 and the opening 11A of the inner drum 11 face the front side Y1. The rotating angle θ can be changed at, for example, five levels such as 5 degrees, 15 degrees, 30 degrees, 45 degrees and 60 degrees.

As an example of application in the washing machine 1, when the washings Q are thrown in the washing drum 3 at the beginning of the washing operation, the rotating angle θ is set as 45 degrees in such a manner that throwing of the washings becomes easy; and then, under a condition of detecting a load of the washings Q or supplying water to the washing drum 3, the rotating angle θ is set as 5 degrees. Moreover, in the washing process and the rinsing process, to promote position alternation of the washings Q in the inner drum 11 to realize efficient washing and rinsing, the rotating angle θ is set to vary between 5 degrees and 60 degrees. In addition, in the dewatering process, since the rotating angle θ is set as 5 degrees to enable the inner drum 11 to rotate at high speed in a state that the washing drum 3 is almost vertical, compared with a situation that the rotating angle θ is set to, for example, 60 degrees, vibration caused by high-speed rotation of the inner drum 11 can be inhibited to be small. In this way, the washing machine 1 capable of changing the rotating angle θ can have the advantages of a top-loading washing machine having a vertical inner drum 11 and the of the drum washing machine having an oblique inner drum 11.

An opening 17A penetrating through the side plate 17 along the left-right direction X is formed in a region that the side plate 17 on the left side X1 is closer to the lower side Z2 than the rotating shaft 14. The opening 17A is formed in an approximately rectangular shape which is long in the front-rear direction Y. A supporting part 19 protruding to an outer side in the front-rear direction Y is arranged at a front end edge and a rear end edge of each side plate 17. The supporting part 19 can be formed integrally with the side plate 17, and can also be installed as, for example, another member made of resin, on the side plate 17.

Hoisting rods 5 each is formed in a shape of a rod having a friction damper 20 at the lower end part. Four hoisting rods 5 are arranged, and are respectively arranged at four corners in the housing 2 when observed from top from the upper side Z1. The hoisting rods 5 are arranged on the upper part of the housing 2, and specifically suspended from a metal outer frame (not shown) forming part of the housing 2. For two hoisting rods 5 arranged front and back on the left side X1, a lower end part of the hoisting rod 5 on the front side Y1 is connected with the supporting part 19 at the front side Y1 of the side plate 17 on the left side X1, and a lower end part of the hoisting rod 5 on the rear side Y2 is connected with the supporting part 19 at the rear side Y2 of the side plate 17 on the left side X1. In two hoisting rods 5 arranged front and back on the right side X2, a lower end part of the hoisting rod 5 on the front side Y1 is connected with the supporting part 19 at the front side Y1 of the side plate 17 on the right side X2, and a lower end part of the hoisting rod 5 (not shown) on the rear side Y2 is connected with the supporting part 19 (not shown) at the rear side Y2 of the side plate 17 on the right side X2. Thus, the supporting frame 4 having the side plates 17, and the washing drum 3 supported by the supporting frame 4 are elastically supported by the housing 2 via the hoisting rods 5.

The rotating part 6 is an approximately fan-shaped metal plate which is thin in the left-right direction X and protrudes to the front side Y1 when observed from the left-right direction X. The rotating part 6 has an outer circumferential edge 6A which is formed in a circular arc shape along the rotating direction K and protrudes to the front side Y1. A through hole 6B penetrating through the rotating part 6 along the left-right direction X is formed in a position on the rotating part 6 consistent with a center of curvature of the outer circumferential edge 6A. A plurality of concave parts 6C are formed in the outer circumferential edge 6A; and the number of the concave parts 6C is 5 here. The concave parts 6C are sunken towards the through hole 6B, penetrate through the rotating part 6 along the left-right direction X, and are arranged and configured along the rotating direction K. A spacing between adjacent concave parts 6C can be fixed or different according to the position of the rotating part 6. In the present embodiment, corresponding to the rotating angle θ set as 5 degrees, 15 degrees, 30 degrees, 45 degrees and 60 degrees, in the rotating part 6 under a state in FIG. 1, two concave parts 6C located on a rear-most side Y2 and an adjacent position are spaced by 10 degrees in the rotating direction K, i.e., in the circumference direction using the through hole 6B as a center; and the spacing between other adjacent concave parts 6C is fixed as 15 degrees. The rotating part 6 is an approximately fan-shaped metal plate which is thin in the left-right direction X and protrudes to the front side Y1 when observed from the left-right direction X. The rotating part 6 has an outer circumferential edge 6A which is formed in a circular arc shape along the rotating direction K and protrudes to the front side Y1. A through hole 6B penetrating through the rotating part 6 along the left-right direction X is formed in a position on the rotating part 6 consistent with a center of curvature of the outer circumferential edge 6A. A plurality of concave parts 6C are formed in the outer circumferential edge 6A, and five concave parts 6C are formed herein. The concave parts 6C are sunken towards the through hole 6B, penetrate through the rotating part 6 along the left-right direction X, and are arranged and configured along the rotating direction K. A spacing between adjacent concave parts 6C can be fixed or different due to the position of the rotating part 6. In the present embodiment, corresponding to the rotating angle θ which is set as 5 degrees, 15 degrees, 30 degrees, 45 degrees and 60 degrees, in the rotating part 6 under a state in FIG. 1, two concave parts 6C located on a rear-most side Y2 and an adjacent position are spaced by 10 degrees in the rotating direction K, i.e., in the circumferential direction using the through hole 6B as a center; and the spacing between other adjacent concave parts 6C is fixed as 15 degrees.

The rotating part 6 is arranged closer to the left side X1 than the side plate 17 on the left side X1. The rotating shaft 14 on the outer drum 10 of the washing drum 3, which protrudes the left side X1 and penetrates through the side plate 17 on the left side X1, is inserted into the through hole 6B of the rotating part 6, and is fixed to the rotating part 6. Thus, the rotating part 6 is connected to the washing drum 3 in a manner of integral rotation via the rotating shaft 14.

The rotating part 6 under the posture in FIG. 1 is integrally provided with, at the rear end of the outer circumferential edge 6A, an extending part 6D protruding to the lower side Z2 and specifically protruding to the outer side of a radial direction R of the rotating part 6 using the through hole 6B as a center. The extending part 6D is formed in a shape of plate which is long in the radial direction R and thin in the left-right direction X. A guiding hole 6E, which is long in the radial direction R and penetrates through the extending part 6D along the left-right direction X, is formed in the extending part 6D. Both ends of the guiding hole 6E along the long-edge direction are blocked. The guiding hole 6E in the up-down direction Z is located in the same position as the opening 17A of the side plate 17 on the left side X1. Regardless of the rotating angle θ which is set from 5 degrees and 60 degrees, the guiding hole 6E is always opposed to the opening 17A from the left side X1.

The unlocking mechanism 7 is fixed to a left side surface of the side plate 17 on the left side X1. The unlocking mechanism 7 includes a body part 21 and a locking part 22. The body part 21 is provided with an actuator (not shown) which includes a torque motor and the like. The locking part 22 is formed in a shape of a bulge protruding from the body part 21 to the rear side Y2 (strictly, to the rear upper side), and is supported by the body part 21 in a manner of sliding in the front-rear direction Y. The actuator of the body part 21 operates to slide the locking part 22 between an entering position for entering to the rear-most side Y2 and an exiting position for exiting to a front-most side Y1.

The locking part 22 in FIG. 1 is in the entering position. Under a condition that any concave part 6C of the rotating part 6 is in the same position as the locking part 22 in the rotating direction K, the locking part 22 is embedded into the concave part 6C in the same position in the rotating direction K by entering the entering position. Thus, rotation of the rotating part 6 and the washing drum 3 is locked. In this state, when the locking part 22 exits to the exiting position, since the locking part 22 leaves the concave part 6C, the rotating part 6 and the washing drum 3 are unlocked.

In FIG. 1, the locking part 22 in the entering position is in a state of being embedded into the concave part 6C located at the upper-most side Z1 and the front-most side Y1. At this moment, in a state that the rotating angle θ is 60 degrees, the rotation of the rotating part 6 and the washing drum 3 is locked. As the concave part 6C into which the locking part 22 is embedded becomes another concave part 6C located at the rear side Y2, the rotating angle θ is decreased; and in a state that the locking part 22 is embedded into the concave part 6C at the rear-most side Y2, the rotating angle θ is 5 degrees. In this state, the rotation of the rotating part 6 and the washing drum 3 is locked.

The rotating mechanism 8 is a mechanism which rotates the washing drum 3 to change the rotating angle θ, and includes a frame 25, a pair of supporting parts 26, a threaded shaft 27, a rotating motor 28, a coupler 29, a nut member 30 and an angle sensor 31.

The frame 25 is formed by bending a metal plate into, for example, a crank shape, and is fixed to the side plate 17 from the right side X2 in a manner of covering the opening 17A of the side plate 17 on the left side X1 from the right side X2. A pair of supporting parts 26 is fixed to the frame 25 in such a manner that the supporting parts 26 are arranged away from each other along the front-rear direction Y, and is in a state of protruding from the frame 25 to the left side X1. The threaded shaft 27 is formed in an elongated cylindrical shape extending along the front-rear direction Y, and a screw thread 27A which extends helically is formed on an almost entire region of the outer circumferential surface. The threaded shaft 27 is rotatably supported on both ends by bearings 32 arranged on a pair of front and rear supporting parts 26.

The rotating motor 28 is an ordinary electric motor, and has an output shaft 33 protruding to the rear side Y2 and configured coaxially with the threaded shaft 27. The front end part of the threaded shaft 27 and the output shaft 33 are connected via the coupler 29 in a manner of integral rotation. Therefore, when the rotating motor 28 is driven to rotate the output shaft 33, the threaded shaft 27 and the output shaft 33 rotate integrally. The nut member 30 has an annular nut having a screw thread (not shown) which extends helically on the inner circumferential surface, and is externally embedded into the threaded shaft 27 in such a manner that the screw thread and the screw thread 27A of the threaded shaft 27 are in mutual threaded connection. When the threaded shaft 27 rotates with the driving of the rotating motor 28, the nut member 30 integrally moves along the axial direction of the threaded shaft 27, i.e., the front-rear direction Y along with rotation of the threaded shaft 27. The nut member 30 is connected with the rotating part 6 via the connecting pin 34 through the connecting pin 34 fixedly inserted into the guiding hole 6E of the extending part 6D of the rotating part 6. Therefore, when the nut member 30 moves along the front-rear direction Y along with rotation of the threaded shaft 27, the rotating part 6 is pulled along the front-rear direction Y by the nut member 30, so as to rotate with the washing drum 3.

The angle sensor 31 is a sensor for detecting the rotating angle θ of the washing drum 3 according to a position of the nut member 30 in the front-rear direction Y. An optical sensor can serve as the angle sensor 31. In this case, the quantity of the angle sensors 31 is set to be the same as the quantity of the concave parts 6C of the rotating part 6, and the angle sensors 31 are fixed to the frame 25 in such a manner that the angle sensors 31 are arranged along the front-rear direction Y. A groove 31A penetrating through the angle sensor 31 along the front-rear direction Y is formed in each angle sensor 31. The angle sensor 31 is in such a state that detection light transects the groove 31A along the up-down direction Z. A rod-shaped detected part 30A called as a limiting part is arranged on the nut member 30. When the rotating angle θ is any angle of 5 degrees, 15 degrees, 30 degrees, 45 degrees and 60 degrees, the detected part 30A is embedded into the groove 31A of one angle sensor 31 so as to shield the detection light at the corresponding groove 31A. Therefore, five angle sensors 31 uniformly detect the rotating angle θ from 5 degrees, 15 degrees, 30 degrees, 45 degrees and 60 degrees.

By referring to the schematic longitudinal-section left view illustrating the washing drum 1, i.e., FIG. 2, besides the above components, the washing machine 1 further includes a door 39, a display and operation part 40, a detergent accommodating chamber 41, a water supply path 42, a drainage path 43, a supporting shaft 44, an agitator 45, a motor 46, a transmitting mechanism 47 and a microcomputer 48 as a controller.

The door 39 is formed in a shape of a bent plate along a connecting surface 2C of the housing 2, and can open or close the outlet-inlet 2D of the housing 2. The display and operation part 40 includes a switch, a liquid crystal panel and the like, and is arranged on, for example, an upper surface 2B of the housing 2. A user operates the switch and the like of the display operating part 40, so as to switch on/switch off a power supply of the washing machine 1, or freely set a washing operation mode, or instruct the washing machine 1 to start or stop the washing operation and the like. Related information of the washing operation is displayed visually on the liquid crystal panel and the like of the display operating part 40.

The detergent accommodating chamber 41 is formed in a shape of a box for accommodating detergents, and is arranged on an upper side Z1 of the washing drum 3. As shown in FIG. 2, when the rotating angle θ is 5 degrees, the detergent accommodating chamber 41 is located directly above the opening 11A of the inner drum 11. The water supply path 42 connected with a tap (not shown) is connected with the detergent accommodating chamber 41 from the upper side Z1 and the rear side Y2. Water from the tap flows through the water supply path 42 and the detergent accommodating chamber 41, flows from the bottom of the detergent accommodating chamber 41 to the opening 11A, and is supplied into the inner drum 11. The detergents contained in the detergent accommodating chamber 41 are supplied into the inner drum 11 along with water which flows through the detergent accommodating chamber 41. The water from the detergent accommodating chamber 41 can flow in a shape of a shower head as shown by a dotted arrow, and is supplied into the inner drum 11. A water supply valve 49, which is opened for starting water supply and closed for stopping water supply, is arranged in the middle of the water supply path 42.

The drainage path 43 is connected with the bottom wall 13 of the outer drum 10 at the lower side Z2, and the water in the outer drum 10 is drained out of the washing machine via the drainage path 43. A drain valve 50, which is opened for starting drainage and closed for stopping drainage, is arranged in the middle of the drainage path 43. The drainage path 43 has a certain length and flexibility in such a manner that the washing drum 3 is not lengthened regardless of the value of the rotating angle (from 5 degrees to 60 degrees) of the washing drum 3.

In relation to the supporting shaft 44, a through hole 13A which penetrates through the bottom wall 13 is formed in a position of a center of circle, consistent with the axis J, of the bottom wall 13 of the outer drum 10; and a through hole 16A which penetrates through the bottom wall 16 is formed in a position of a center of circle, consistent with the axis J, of the bottom wall 16 of the inner drum 11. The supporting shaft 44 is formed in a shape of a tube which encircles the through hole 16A from the bottom wall 16 and extends to the lower side Z2 along the axis J. The supporting shaft 44 is inserted into the through hole 13A of the bottom wall 13, and the lower end part of the supporting shaft 44 is closer to the lower side Z2 than the bottom wall 13.

The agitator 45, which is a so-called pulsator, is formed in a shape of a disc which uses the axis J as a center of circle, and is concentrically arranged with the inner drum 11 in the inner drum 11 along the bottom wall 16. A plurality of blades 45A, which are configured radially, are arranged on an upper surface of the opening 11A, which faces the inner drum 11 from the lower side Z2, on the agitator 45. The agitator 45 is provided with a rotating shaft 51 extending to the lower side Z2 along the axis J from the center of circle of the agitator 45. The rotating shaft 51 is inserted into the hollow part of the supporting shaft 44; and the lower end part of the rotating shaft 51 is closer to the lower side Z2 than the bottom wall 13 of the outer drum 10.

The motor 46 is composed of, for example, a variable frequency motor. In the housing 2, the motor 46 is arranged on the lower side Z2 of the outer drum 10, and is fixed to the bottom wall 13 of the outer drum 10 through an anchor bolt (not shown) and the like. Therefore, the motor 46, together with the washing drum 3 and the supporting frame 4, is elastically supported by the housing 2 via the hoisting rods 5(see FIG. 1), and rotates integrally with the washing drum 3 around the rotating shaft 14. The motor 46 has an output shaft 52 which rotates around the axis J. The transmitting mechanism 47 is sandwiched between the lower end parts of the supporting shaft 44 and the rotating shaft 51 and the upper end part of the output shaft 52. The transmitting mechanism 47 selectively transmits driving force, outputted from the output shaft 52 by the motor 46, to one or both of the supporting shaft 44 and the rotating shaft 51. A known clutch and the like are used as the transmitting mechanism 47. When the driving force from the motor 46 is transmitted to the supporting shaft 44 and the rotating shaft 51, the inner drum 11 and the agitator 45 rotate around the axis J.

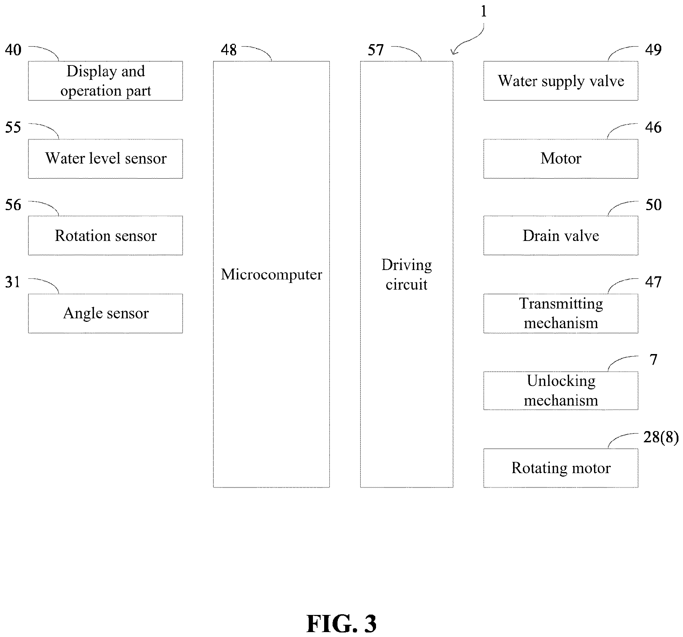

The microcomputer 48 includes, for example, a CPU and a memory such as a ROM, a RAM and the like, and is arranged in the housing 2. By referring to the block diagram in FIG. 3 illustrating an electrical structure of the washing machine 1, the washing machine 1 also includes a water level sensor 55, a rotation sensor 56 and an angle sensor 31. The water level sensor 55, the rotation sensor 56, the above angle sensor 31 and the display and operation part 40 are electrically connected with the microcomputer 48 respectively. The rotating motor 28 of the rotating mechanism 8, the water supply valve 49, the motor 46, the drain valve 50, the transmitting mechanism 47 and the unlocking mechanism 7 are electrically connected with the microcomputer 48 respectively through, for example, a driving circuit 57.

The water level sensor 55 is a sensor which detects water levels in the outer drum 10 and the inner drum 11, i.e., detects the quantity of water in the inner drum 11. A detection result of the water level sensor 55 is inputted into the microcomputer 48 in real time.

The rotation sensor 56 is an apparatus which captures the rotating speed of the motor 46, and strictly captures the rotating speed of the output shaft 52 of the motor 46. For example, the rotation sensor 56 is composed of a plurality of Hall ICs (not shown). The rotating speed captured by the rotation sensor 56 is inputted into the microcomputer 48 in real time. The microcomputer 48 controls the power-on/off of the motor 46 according to the inputted rotating speed, and specifically controls a duty ratio of voltage applied to the motor 46 so that the motor 46 is controlled in a manner of rotating at desired rotating speed. In the present embodiment, the rotating speed of the motor 46 is the same as the rotating speed of the inner drum 11 and the rotating speed of the agitator 45. In addition, the microcomputer 48 can also control a rotating direction of the motor 46. Therefore, the motor 46 can rotate in a forward direction or rotate in a reverse direction. In the present embodiment, the rotating direction of the output shaft 52 of the motor 46 with the same as the rotating direction of the inner drum 11 and the rotating direction of the agitator 45. For example, when the motor 46 rotates in the forward direction, the inner drum 11 and the agitator 45 rotate clockwise when observed from top from the upper side Z1; and when the motor 46 rotates in the reverse direction, the inner drum 11 and the agitator 45 rotate counterclockwise in the reverse direction when observed from top.

The rotating angle θ detected by the angle sensor 31 is inputted into the microcomputer 48 in real time. As mentioned above, when the user operates the display and operation part 40 to select an operation condition such as washing operation, the microcomputer 48 accepts the selection. The microcomputer 48 displays necessary information to the user on the display operating part 40 in a visual manner.

The microcomputer 48 controls the transmitting mechanism 47 to switch a target to which the driving force of the motor 46 is transmitted into one or both of the supporting shaft 44 of the inner drum 11 and the rotating shaft 51 of the agitator 45. The microcomputer 48 controls the opening and closing of the water supply valve 49 and the drain valve 50. Therefore, the microcomputer 48 opens the water supply valve 49 to supply water to the inner drum 11 in a state of closing the drain valve 50, and opens the drain valve 50 to execute drainage of the inner drum 11. The microcomputer 48 controls the driving of the rotating motor 28 of the rotating mechanism 8 so that the washing drum 3 rotates. The microcomputer 48 controls an actuator (not shown) of a body part 21 of the unlocking mechanism 7 so that the locking part 22 slides between an entering position and an exiting position (see FIG. 1). The microcomputer 48 enables the locking part 22 to slide to the entering position, so as to fix the rotating angle θ of the washing drum 3 and limit the rotation of the washing drum 3; and enables the locking part 22 to slide to the exiting position from the entering position, so as to allow the washing drum 3 to rotate.

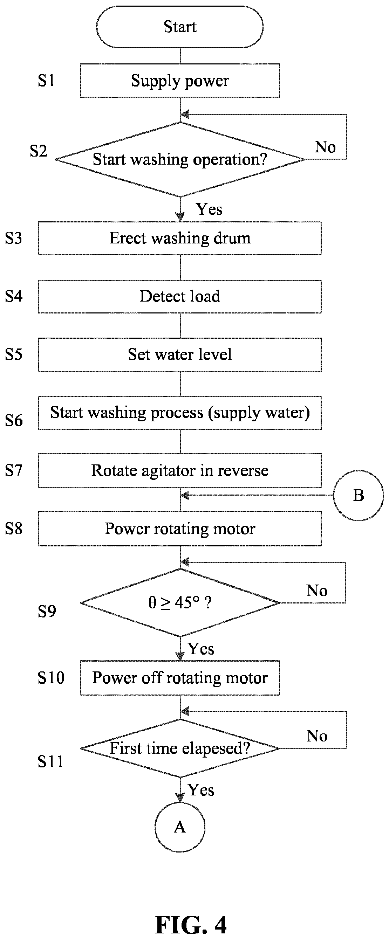

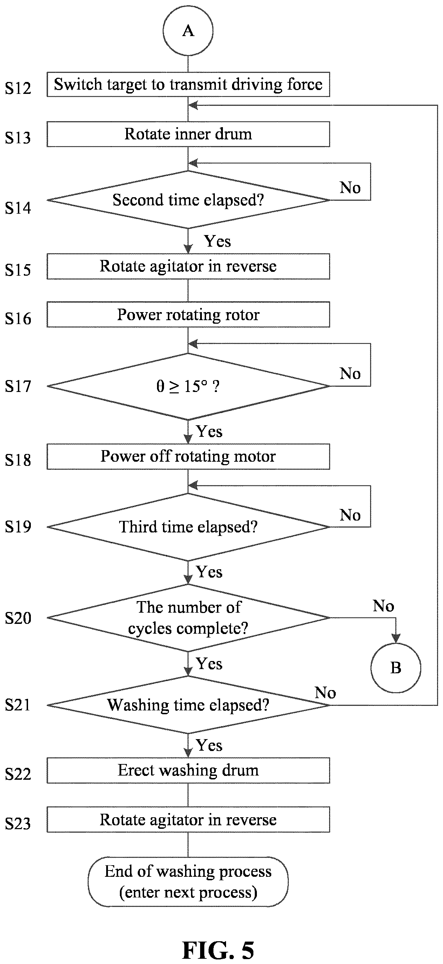

Next, by referring to the flow charts of FIG. 4 and FIG. 5, washing operation executed by the microcomputer 48 in the washing machine 1 is illustrated. In the washing operation, a preparation process is performed initially, the washings Q are washed in a washing process after the preparation process, the washings Q are rinsed in a rinsing process after the washing process, and the washings Q are dewatered in a dewatering process. The dewatering process includes a final dewatering process which is executed at the end of the washing operation, and an intermediate dewatering process which is executed after the washing process and the rinsing process. It should be noted that in the washing operation, running water can be used only, or bath water is used as required.

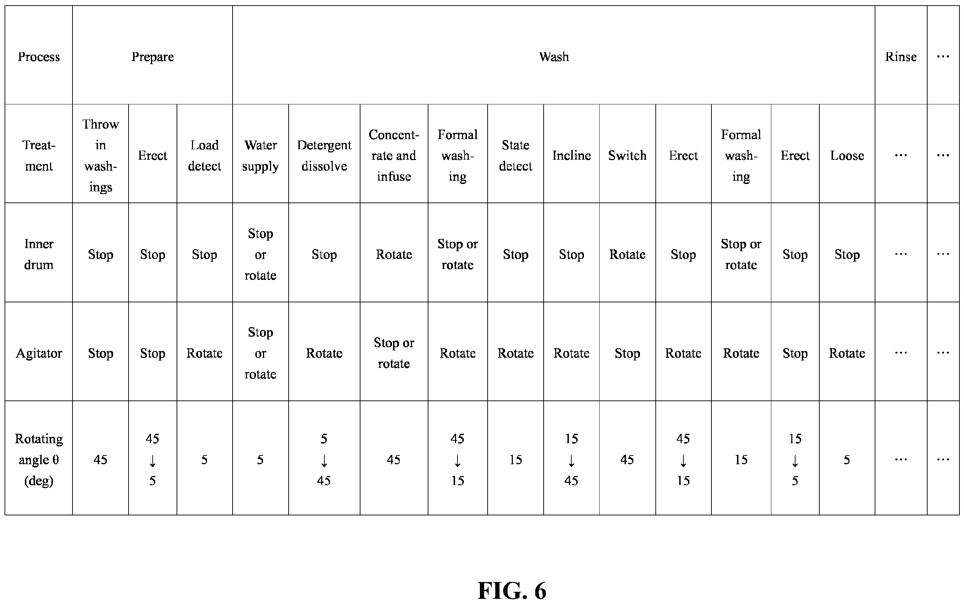

In the table of FIG. 6, contents of treatment implemented in each process of the washing operation, the states of the inner drum 11 and the agitator 45 in each treatment, and the value of the rotating angle θ in each treatment are summarized and displayed. When the following contents are illustrated, see FIG. 6.

With reference to FIG. 4, in a case where a user operates the display and operation part 40 to power the washing machine (step S1), the microcomputer 48 monitors whether the user operates the display and operation part 40 to issue an instruction of starting the washing operation (step S2). It should be noted that the rotating angle θ of the washing drum 3 of the washing machine 1 in a waiting state is 45 degrees in the present embodiment. If the rotating angle θ is not 45 degrees when the washing machine is powered on, the microcomputer 48 rapidly rotates the washing drum 3 to change the rotating angle θ to 45 degrees. In a state that the rotating angle θ is 45 degrees, the opening 11A of the inner drum 11 (see FIG. 2) and the outlet-inlet 2D of the housing 2 (see FIG. 2) are opposed. In this state, in a preparation stage of the preparation process, the user throws the washings Q into the inner drum 11 through the outlet-inlet 2D. When the washings Q are thrown in, the inner drum 11 and the agitator 45 are in a stop state.

Then, when the user sets a mode of the washing operation, and issues the instruction of starting the washing operation ("Yes" in step S2), the microcomputer 48 powers the rotating motor 28 of the rotating mechanism 8 in a state that the inner drum 11 and the agitator 45 remain stopped until the rotating angle θ is changed from 45 degrees to 5 degrees so that the washing drum 3 is vertical (step S3).

Next, the microcomputer 48 detects the quantity of the washings Q in the inner drum 11 as a load (step S4). Specifically, the microcomputer 48 rotates the agitator 45 at low speed in a state that the inner drum 11 is stopped. Specifically, the microcomputer 48 enables the agitator 45 to rotate in reverse in a manner of performing forward rotation and reverse rotation repeatedly and alternately. The microcomputer 48 stops the driving of the motor 46 after the agitator 45 is rotated only in the forward direction for a specified time and after the agitator 45 is rotated only in the reverse direction for a specified time; and measures the inertial rotation amount of the motor 46 immediately after stop. The inertial rotation amount is, for example, a total number of pulses outputted by the Hall IC (not shown) of the rotating sensor 56 during the inertial rotation of the motor 46. The larger the load of the washings Q is, the smaller the inertial rotation amount of the motor 46 connected with the agitator 45, which bears heavy washings Q, is. The smaller the load of the washings Q is, the larger the inertial rotation amount of the motor 46 connected with the agitator 45, which bears light washings Q, is. The microcomputer 48 detects the load according to the value of the inertial rotation amount. The unit of the load is, for example kg. Since the rotating angle θ is set as 5 degrees to enable the washings Q in the inner drum 11 to be born efficiently on the agitator 45 in a state that the washing drum 3 is vertical, the load can be detected correctly. It should be noted that the load is detected through fluctuation of the rotating speed of the motor 46 during constant low-speed rotation of the inner drum 11 instead of the inertial rotation amount.

The microcomputer 48 displays on the display and operation part 40 duration of the washing operation corresponding to the detected load, the quantity of required detergents and the like. In addition, the microcomputer 48 sets a water level of the water stored in the inner drum 11 in the washing process according to the detected load (step S5). Relationships between the duration of the washing operation and the load, between the quantity of the required detergents and the load and between the water level and the load are preset and stored in a memory of the microcomputer 48.

Since the preparation process is ended when the setting of the water level in step S5 is completed, the microcomputer 48 starts the washing process (step S6). In the initial treatment of the washing process, the microcomputer 48 opens the water supply valve 49 to supply water to the inner drum 11. The rotating angle θ is still 5 degrees so that the detergent accommodating chamber 41 is located directly above the opening 11A of the inner drum 11. Therefore, the water from the tap (not shown) passes through the water supply path 42 and the detergent accommodating chamber 41, and is supplied, together with the detergents in the detergent accommodating chamber 41, into the inner drum 11 via the opening 11A (see FIG. 2). In the water supply process, the inner drum 11 can be stopped or rotated, and the agitator 45 can be stopped or rotated. The agitator 45 herein can rotate in reverse described above or integrally rotate in the same direction as the inner drum 11. When the water stored in the inner drum 11 reaches the water level set in step S5, the microcomputer 48 closes the water supply valve 49 to end the water supply.

After the water supply, the microcomputer 48 rotates the agitator 45 in the reverse direction in a state that the inner drum 11 is stopped (step S7). The microcomputer 48 powers the rotating motor 28 of the rotating mechanism 8 in a state that the agitator 45 continues to rotate in the reverse direction, so that the washing drum 3 is rotated in a manner of being further inclined to the front side Y1 than the vertical state (step S8). When the washing drum 3 rotates to change the rotating angle θ from 5 degrees to 45 degrees ("Yes" in step S9), the microcomputer 48 cuts off the power supply to the rotating motor 28 (step S10). Moreover, when a specified first time elapsed after the reverse rotation of the agitator 45 in step S7 ("Yes" in step S11), as shown in FIG. 5, the microcomputer 48 controls the transmitting mechanism 47, so as to switch the target to which the driving force of the motor 46 is transmitted from the agitator 45 to the inner drum 11 (step S12). Thus, the inner drum 11 rotates (step S13). The first time is preset according to each load and is stored in the memory of the microcomputer 48.

When the first time elapsed after the agitator 45 starts to rotate in reverse in step S7, the detergents, which are supplied to the inner drum 11 by means of the water supply, are stirred by a water flow in the inner drum 11, which is generated from the reverse rotation of the agitator 45. Thus, the detergents are dissolved in the water in the inner drum 11, thereby generating washing water. After such treatment of dissolving the detergents, the inner drum 11 rotates in step S13 and the rotation of the inner drum 11 only lasts for a specified second time. The second time is preset according to each load and is stored in the memory of the microcomputer 48. In the second time, the washing water is concentrated by the water flow generated in the inner drum 11 along with the rotation of the inner drum 11 and is infused into the washings Q. In the second time, the agitator 45 can be stopped or rotated. The agitator 45 herein can rotate in revers or integrally rotate in the same direction as the inner drum 11.

When the second time elapsed after the inner drum 11 starts to rotate in step S13 ("Yes" in step S14), the microcomputer 48 controls the transmitting mechanism 47, so as to switch the target to which the driving force of the motor 46 is transmitted into the agitator 45, so that the agitator 45 rotates in the reverse direction (step S15). The microcomputer 48 powers the rotating motor 28 of the rotating mechanism 8 in a state that the agitator 45 continues rotating in the reverse direction, so that the washing drum 3 is rotated in a manner of being further vertical (step S16). When the rotating angle θ changes from 45 degrees to 15 degrees ("Yes" in step S17), the microcomputer 48 cuts off the power supply to the rotating motor 28 (step S18).

When the rotating motor 28 is powered in step S16, the washings Q in the inner drum 11 are formally washed through continuous reverse rotations of the agitator 45 from step S15. In formal washing, the washings Q contact with the blade 45A of the agitator 45 which rotates in the reverse direction or is driven by the water flow generated in the inner drum 11 by the agitator 45 which rotates in the reverse direction so that the washings Q are agitated. Through the mechanical force (such as friction, vibration and the like) of the water flow to the washings Q during agitation, dirt is removed from the washings Q, so that the washings Q are washed. In addition, the dirt is chemically decomposed through the detergents contained in the washing water in the inner drum 11, so that the washings Q are washed.

In formal washing, the inner drum 11 can be stopped or rotated. Since a complex water flow can be generated in the inner drum 11 when the inner drum 11 rotates while the agitator 45 rotates in the reverse direction, the washings Q can be efficiently washed through the water flow; and since the washings Q can be washed with a small amount of water, water saving can be realized.

In addition, the formal washing is in such a state in step S18 that the agitator 45 also continues rotating in the reverse direction after the rotating motor 28 is powered off. In this state, the microcomputer 48 measures the inertial rotation amount of the motor 46 in the same detection order as that of the load in step S4, and detects the state of the washings Q (i.e., the load of the washings Q which have absorbed the water) according to the inertial rotation amount. When the load herein is greater than a specified load, to efficiently wash a large number of washings Q, the microcomputer 48 increases the rotating speed of the agitator 45 in the formal washing and strengthens the water flow. When the load herein is smaller than the specified load, the strength of the current water flow exceeds required strength. Therefore, to prevent the water from being splashed around the inner drum 11, the microcomputer 48 decreases the rotating speed of the agitator 45 and weakens the water flow. It should be noted that the inner drum 11 is in the stop state during the detection of the state of the washings Q.

Then, when a specified third time elapsed after the agitator 45 starts to rotate in reverse in step S15 ("Yes" in step S19), the microcomputer 48 confirms whether necessary number of circles of the washing process is completed (step S20). The third time is preset according to each load and is stored in the memory of the microcomputer 48. The necessary number of circles in the present embodiment refers to, for example, the number of cycles for two formal washings. Therefore, since the necessary number of circles is not completed when the formal washing is only implemented once ("No" in step S20), the microcomputer 48 implements treatment after step S8 again.

The microcomputer 48 implements steps S8 to S11 for the second time in a state that the agitator 45 continues rotating in the reverse direction from step S15. Thus, the washing drum 3 is inclined until the rotating angle θ, which is 15 degrees up to now, reaches 45 degrees. Then, the microcomputer 48 implements steps S12 to S14 for a second time. Thus, the inner drum 11 is rotated in a state that the agitator 45 is stopped. Thus, in a state that the rotating angle θ is 45 degrees, a water flow is generated in the inner drum 11, and the position of the washings Q in the inner drum 11 is alternated through the water flow.

Then, the microcomputer 48 implements step S15 for the second time so as to start the reverse rotation of the agitator 45, and implements steps S16 to S18 for the second time so that the washing drum 3 is vertical until the rotating angle θ, which is 45 degrees up to now, reaches 15 degrees. Then, the microcomputer 48 continuously rotates the agitator 45 in the reverse rotation from step S15 until a third time elapsed, thereby implementing second formal washing. In this case, the duration, at which the agitator 45 rotates in the reverse direction in a state that the rotating angle θ is fixed as 15 degrees, is defined as the second formal washing, but is not limited to this; and like first formal washing, the duration, at which the agitator 45 rotates in the reverse direction while the rotating angle θ is changed from 45 degrees to 15 degrees, is also included in the second formal washing.

Since the necessary number of circles is completed ("Yes" in step S20) when the second formal washing has started and the third time elapsed ("Yes" in step S19), the microcomputer 48 confirms whether the washing time set for the washing process elapsed (step S21). The washing time is part of the duration of the washing operation which is set according to the load detected in step S4. When the washing time does not elapse ("No" in step S21), the microcomputer 48 can also execute the treatment after step S13, thereby implementing third formal washing after switching the position of the washings Q in the inner drum 11 again.

When the washing time elapsed ("Yes" in step S21), the microcomputer 48 enables the washing drum 3 to be vertical in a state that the inner drum 11 and the agitator 45 are stopped until the rotating angle θ, which is 15 degrees up to now, reaches 5 degrees (step S22). Then, the microcomputer 48 rotates the agitator 45 in the reverse direction in a state that the inner drum 11 is stopped (step S23). Thus, since the washings Q in the inner drum 11 are agitated by the agitator 45, the washings Q which are, for example, biasedly disposed in the inner drum 11 in an agglomerate state are loosened. Since the washing process is ended when the loosening of the washings Q is ended, the microcomputer 48 continues to execute a next process, i.e., a rinsing process. It should be noted that before the rinsing process is started, the microcomputer 48 can also open the drain valve 50 firstly to temporarily drain the water in the inner drum 11.

In this way, the microcomputer 48 controls the motor 46 and the rotating mechanism 8 in executing the washing process of the washing operation, so as to enable the agitator 45 to rotate in the reverse direction or enable the inner drum 11 to rotate at multiple rotating angles θ. Specifically, by referring to FIG. 6, from the initial water supply treatment of the washing process to the final loosening treatment, the microcomputer 48 changes the rotating angle θ to various values, and enables the agitator 45 to rotate in the reverse direction and/or enables the inner drum 11 to rotate at multiple rotating angles θ.

By combining reverse rotation of the agitator 45 and rotation of the inner drum 11, the mechanical force produced by the agitator 45 and the inner drum 11 can be efficiently transmitted to the washings Q, regardless of the value of the rotating angle θ, in other words, even if the washing drum 3 is inclined to a certain degree relative to a reference axis L. In addition, position alternation of the washings Q in the inner drum 11 can be promoted to reduce uneven washing of the washings Q. Then, by combining the reverse rotation of the agitator 45 and the rotation of the inner drum 11 at multiple rotating angles θ, the mechanical force can be further efficiently transmitted to the washings Q, to further reduce uneven washing. As a result, washing performance of the washing machine can be improved.

In addition, like the above dissolving treatment of the detergents, the microcomputer 48 rotates the agitator 45 in the reverse direction in a state that the washing drum 3 is rotating in the washing process. Thus, the detergents can be efficiently dissolved in the water to generate washing water of high concentration. In addition, the microcomputer 48 not only rotates the inner drum 11 in concentration and infusion treatment, but also rotates the inner drum 11 in a state that the washing drum 3 is under rotation in the formal washing treatment. Thus, the washing water can be efficiently infused into the washings Q. Therefore, the washing performance can be further improved. In addition, the washing water is generated or infused into the washings Q during rotation of the washing drum 3, so as to shorten the time of the washing operation.

The present invention is not limited to above described embodiments, and can be changed in various modes within a scope of the claims.

For example, the above treatment in the washing process is only an example, the value of the rotating angle θ and the combination of the treatment can be changed arbitrarily.

In addition, the combination of the reverse rotation of the agitator 45 and rotation of the inner drum 11 in the washing process can also be implemented in the next process, i.e., the rinsing process. In this case, the microcomputer 48 controls the motor 46 and the rotating mechanism 8 in executing the rinsing process, operation, so as to enable the agitator 45 to rotate in the reverse direction or enable the inner drum 11 to rotate at multiple rotating angles θ.

In addition, as long as the rotation of the washing drum 3 can be limited when the driving of the rotating motor 28 is stopped, the unlocking mechanism 7 and the concave part 6C of the rotating part 6 can be omitted. Thus, stepless adjustment can be made to the rotating angle θ.

## Claims

1. A washing machine, comprising:
a washing drum having an inner drum and an outer drum, wherein the inner drum is a cylindrical inner drum for accommodating washings and is capable of rotating around an axis of the inner drum, the outer drum accommodates the inner drum, the washing drum is capable of rotating in a manner where the axis crosses with a vertical direction;
an agitator capable of rotating to agitate the washings in the inner drum;
a motor for rotating the inner drum and the agitator;
a rotating mechanism for rotating the washing drum to change a crossing angle between the vertical direction and the axis; and
a controller for controlling the motor and the rotating mechanism so as to execute a washing operation where the agitator rotates in reverse or the inner drum rotates at a plurality of the crossing angle.

2. The washing machine according to claim 1, wherein
under a state that the washing drum rotates in the washing operation, the controller rotates the agitator in reverse or rotates the inner drum.
